# EUROPEAN PATENT SPECIFICATION

(11) **EP 3 504 405 B1**
(45) Date of publication and mention of the grant of the patent: **24.02.2021**
(21) Application number: 17754156.2
(22) Date of filing: 17.08.2017
(51) Int. Cl.: F01N 3/20, B01D 53/86, F01N 3/22, F01N 3/28, F01N 3/30, F02C 3/00, F02C 3/30, F02C 3/32

(54) **TEMPERED AMMONIA INJECTION FOR GAS TURBINE SELECTIVE CATALYST REDUCTION SYSTEM**
TEMPERIERTE AMMONIAKEINSPRITZUNG FÜR EIN SELEKTIVES REDUKTIONSKATALYSATORSYSTEM EINER GASTURBINE
INJECTION D'AMMONIAQUE TEMPERÉE POUR SYSTÈME DE REDUCTION SÉLECTIVE CATALYTIQUE D'UNE TURBINE À GAZ

(30) Priority: 23.08.2016 US 201615244441
(43) Date of publication of application: 03.07.2019
(73) Proprietor: General Electric Technology GmbH, 5400 Baden (CH)
(72) Inventor: CZARNECKI, Lawrence Joseph, Knoxville, Tennessee 37922 (US)
(74) Representative: BRP Renaud & Partner mbB Rechtsanwälte Patentanwälte Steuerberater
(86) International application number: PCT/EP2017/070808
(87) International publication number: WO 2018/036891

(56) References cited:
- EP-A1- 3 135 877
- EP-A1- 3 135 877
- US-A1- 2010 024 379
- US-A1- 2010 024 379
- US-A1- 2011 030 331
- US-A1- 2011 030 331
- US-A1- 2011 036 066
- US-A1- 2011 036 066
- US-A1- 2014 096 532
- US-A1- 2014 096 532
- US-A1- 2014 230 410
- US-A1- 2014 230 410

## Description

### TECHNICAL FIELD

The present application and the resultant patent relate generally to gas turbine engines and more particularly relate to tempered ammonia injection for reducing the temperature of the hot combustion gases in a gas turbine selective catalyst reduction system.

### BACKGROUND OF THE INVENTION

In the combustion process of a gas turbine engine, nitrogen oxides and other types of regulated emissions are produced. Specifically, a simple cycle gas turbine emits hot flue gases that contain unacceptable levels of nitrogen oxides. One solution for reducing the overall levels of nitrogen oxide emissions is the use of a selective catalyst reduction system. Generally described, the selective catalyst reduction system adds a reductant, typically ammonia or urea, to the hot combustion gas stream before passing the combustion gas stream through a catalyst bed so as to absorb selectively the nitrogen oxides and the reducing agent. The absorbed components undergo a chemical reaction on the catalyst surface and the reaction products are desorbed. Specifically, the reactant reacts with the nitrogen oxides in the combustion gas stream to form water and nitrogen. Other types of catalysts and other types of reductants may be used.

The overall efficiency of the selective catalyst reduction system may depend in part on the temperature of the combustion gas stream. Specifically, the efficient temperature range of the selective catalyst reduction system may be relatively narrow. As such, the hot combustion gas stream generally should be cooled before reaching the catalyst bed. Moreover, careful metering and distribution of the reductant to the combustion gas stream upstream of the catalyst is required for the selective catalyst reduction system to convert and remove a sufficient level of the nitrogen oxides and the like.

US 2011/0036066 A1 discloses an arrangement of a selective catalyst reduction (SCR) system comprising a tempering air injection grid with a plurality of air injection lances for injecting tempering air into the combustion gas stream and a separate ammonia injection grid having a plurality of ammonia injection lances for injecting ammonia into the combustion gas stream and positioned in a distance downstream of the tempering air injection grid.

US 2014/0096532 A1 discloses an SCR system, wherein a slip stream of exhaust gases is withdrawn from a location downstream of the catalyst and channeled through a return duct, wherein urea is injected through a port into the return duct and the slip stream of exhaust gases is used to decompose the urea into ammonia gas which is injected into the flue gas through an ammonia injection grid which has a plurality of lances.

US 2011/0030331 A1 discloses an SCR system in which a compressor provides heated and pressurized air to an ammonia mixing tank to vaporize the liquid ammonia within the tank to inject the vaporized ammonia into the exhaust gas via an ammonia injection grid. The higher pressure air provided by the compressor facilitates effective mixing of ammonia and exhaust gas.

US 2010/0024379 A1 discloses an SCR assembly which in one embodiment uses separate cooling water nozzles and reductant conduits arranged in the exhaust duct in a distance to each other in the flow direction of the exhaust gases. In another embodiment, the cooling water and the reductant are provided through separate conduits to a mixer and are mixed therein, before the cooling water and reductant mixture is provided to a combination array and injected therethrough into the flowing exhaust gases.

US 2014/0230410 A1 discloses an arrangement for NOx reduction in a selective catalytic reducer coupled to a turbocharged engine exhaust, wherein an urea reductant is introduced through a dosing device into a bypass line, which branches off from an intake system downstream of a compressor and issues into the exhaust gas discharge system upstream of a selective catalytic converter, to form ammonia which serves as reducing agent for the selective catalytic converter. The temperature of the urea reductant is controlled by portioning a flow of a combination of compressed air and ambient air across the reductant. A mixer in the bypass line mixes the ammonia with the charge air in order to form as homogeneous an air-ammonia mixture as possible, which flows through the selective catalytic converter.

EP 3 135 877 A1, which is a prior art document within the meaning of Art. 54 (3) EPC, describes an SCR arrangement comprising a junction at which a cooling air supply feed and a reductant supply feed combine to form a combined supply feed thereafter, and an injector disposed within the exhaust duct to which the combined supply feed connects.

### SUMMARY OF THE INVENTION

The present application and the resultant patent provide a selective catalyst reduction system for use with a combustion gas stream of a gas turbine. The selective catalyst reduction system may include an inlet configured to be positioned about the gas turbine, a combined ammonia-tempering air injection grid positioned about the inlet, and a catalyst positioned downstream of the combined ammonia-tempering air injection grid. The combined ammonia-tempering air injection grid comprises a plurality of air injection lances for providing a flow of tempering air and a plurality of ammonia injection lances for providing a flow of ammonia. The plurality of air injection lances is in communication with a source of tempering air via one or more tempering air conduits and the plurality of ammonia injection lances is in communication with an ammonia source via one or more ammonia conduits different from the one or more tempering air conduits. The air injection lances and the ammonia injection lances are separate structures with dedicated spray nozzles and/or using dual fluid nozzles. The plurality of air injection lances and the plurality of ammonia injection lances are positioned at the same location in the direction of flow of the combustion gas stream. The combined ammonia-tempering air injection grid is configured to inject tempering air through the plurality of air injection lances and ammonia through the plurality of ammonia injection lances into the combustion gas stream upstream of the catalyst.

The present application and the resultant patent further provide a method of operating a selective catalyst reduction system with a combustion gas stream of a gas turbine engine. The method includes the steps of flowing the combustion gas stream into the selective catalyst reduction system, injecting a cooling air stream into the combustion gas stream about an inlet of the selective catalyst reduction system, and injecting an ammonia stream into the combustion gas stream about the inlet of the selective catalyst reduction system, wherein the cooling air stream and the ammonia stream is injected into the combustion gas stream through a combined ammonia-tempering air injection grid positioned about the inlet and comprising a plurality of air injection lances for providing a flow of cooling air and a plurality of ammonia injection lances for providing a flow of ammonia. The plurality of air injection lances is in communication with a source of tempering air via one or more tempering air conduits and the plurality of ammonia injection lances is in communication with an ammonia source via one or more ammonia conduits different from the one or more tempering air conduits. The air injection lances and the ammonia injection lances are separate structures with dedicated spray nozzles and/or using dual fluid nozzles. The plurality of air injection lances and the plurality of ammonia injection lances are positioned at the same location in the direction of flow of the combustion gas stream. The tempering air is injected through the plurality of air injection lances and the ammonia is injected through the ammonia injection lances into the combustion gas stream upstream of a catalyst of the selective catalyst reduction system. The method further includes the steps of mixing the combustion gas stream, the cooling air stream, and the ammonia stream, and reacting the mixed stream with the catalyst.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine showing a compressor, a combustor, a turbine, a load, and a selective catalyst reduction system which as such does not form part of the invention as claimed.
Fig. 2 is a schematic diagram of a gas turbine engine and an alternative embodiment of a selective catalyst reduction system which as such does not form part of the invention as claimed.
Fig. 3 is a schematic diagram of a gas turbine engine and a selective catalyst reduction system according to present invention as may be described herein.
Fig. 4 is a schematic diagram of a gas turbine engine and an alternative example of a selective catalyst reduction system which as such does not form part of the invention as claimed.

### DETAILED DESCRIPTION

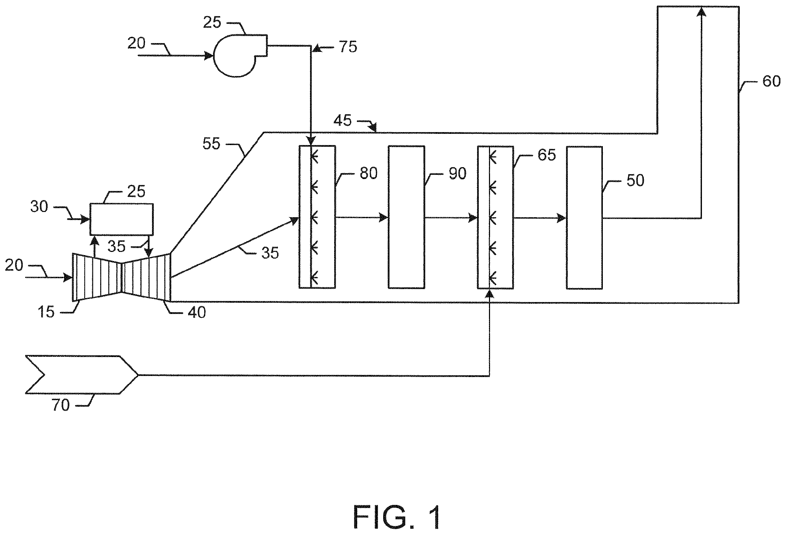

Referring now to the drawings, in which like numerals refer to like elements throughout the several views, Fig. 1 shows a schematic view of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25 positioned in a circumferential array and the like. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft and an external load such as an electrical generator and the like.

The gas turbine engine 10 may use natural gas, various types of syngas, liquid fuels, and/or other types of fuels and blends thereof. The gas turbine engine 10 may have different configurations and may use other types of components. Other types of gas turbine engines also may be used herein. Multiple gas turbine engines, other types of turbines, and other types of power generation equipment also may be used herein together.

The gas turbine engine 10 also may include a selective catalyst reduction system 45 which as such does not form part of the invention as claimed. The selective catalyst reduction system 45 may be positioned downstream of the turbine 40. As described above, the selective catalyst reduction system 45 may include a catalyst 50 therein so as to react with the combustion gas stream 35. The catalyst 50 may be of conventional design and may be manufactured from suitable carrier and active catalytic components. Different types of catalysts 50 may be used herein. The catalyst 50 may have any suitable size, shape, or configuration. The selective catalyst reduction system 45 may extend from an inlet 55 to a stack 60 or other type of exhaust. An ammonia injection grid 65 may be positioned about the catalyst 50 so as to inject a reductant such as ammonia into the combustion gas stream 35. The ammonia injection grid 65 may be in communication with an ammonia source 70. The ammonia injection grid 65 may be in communication with the ammonia source 70 via an extensive piping system to produce an adequate ammonia distribution into the incoming combustion gas stream 35. The stack 60 or other type of exhaust may be positioned downstream of the catalyst 50.

The selective catalyst reduction system 45 also may include a tempering air system 75. The tempering air system 75 may reduce the temperature of the combustion gas stream 35 before the stream 35 reaches the catalyst 50. The tempering air system 75 may include a tempering air grid 80 positioned about the inlet 55 of the selective catalyst reduction system 45 and upstream of the ammonia injection grid 65 and the catalyst 50. The tempering air grid 80 may be in communication with a source of ambient air 20 via a tempering air fan 85 or other type of air movement device. A gas mixer 90 may be positioned downstream of the tempering air grid 80. The gas mixer 90 may include a series of baffles and the like. The gas mixer 90 may mix the incoming combustion gas stream 35 and the ambient air 20 so as to obtain an adequate temperature distribution. The now cooled flow then may flow past the ammonia injection grid 65 and the catalyst 50 for reaction therewith.

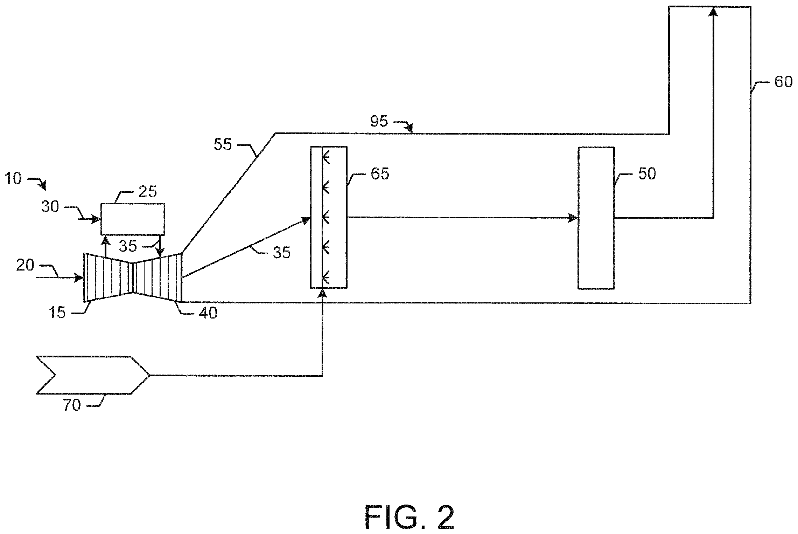

Fig. 2 shows the gas turbine engine 10 with an alternative selective catalyst reduction system 95 which as such does not form part of the invention as claimed. In this example, the selective catalyst reduction system 95 may not use the tempering air system 75. Instead, the selective catalyst reduction system 95 may position the ammonia injection grid 65 about the inlet 55 of the selective catalyst reduction system 95 at a distance to the catalyst 50. By injecting the ammonia directly into the hot combustion gas stream 35 as it exits the turbine 40, the ammonia injection grid 65 may accommodate the complex gas flow patterns exiting the turbine 40. The selective catalyst reduction systems described herein are for the purpose of example only. Other types of selective catalyst reduction systems and system components may be in use.

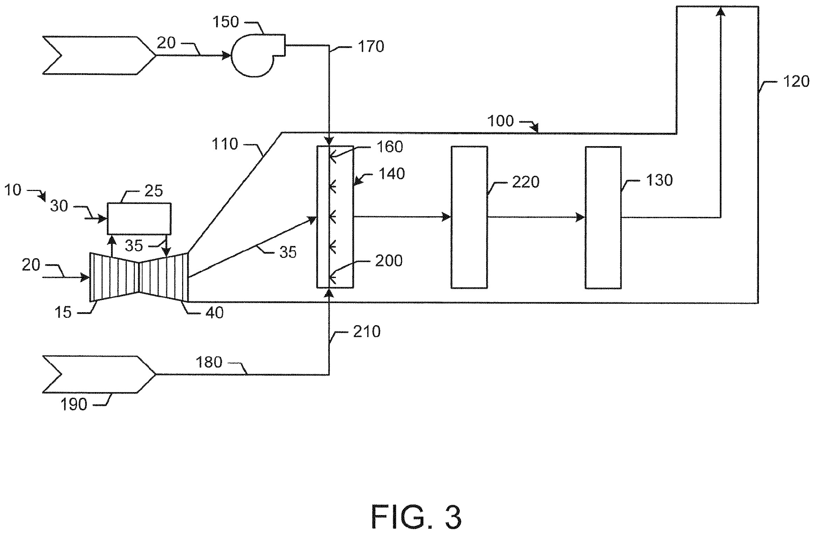

Fig. 3 shows the gas turbine engine 10 with a selective catalyst reduction system 100 according to present invention as may be described herein. The selective catalyst reduction system 100 may extend from an inlet 110 positioned about the turbine 40 to a stack 120 or other type of exhaust at a downstream end thereof. The selective catalyst reduction system 100 may have any suitable size, shape, configuration, or capacity.

The selective catalyst reduction system 100 may include a catalyst 120. The catalyst 120 may be of conventional design. The catalyst 120 may be positioned within the selective catalyst reduction system 100 at a distance downstream from the inlet 110.

Not according to the invention, the Till selective catalyst reduction system 110 may include a combined ammonia-tempering air injection grid 140. The combined ammonia-tempering air injection grid 140 may be positioned about the inlet 110 of the selective catalyst reduction system 100 in the path of the combustion gas stream 35. The combined ammonia-tempering air injection grid 140 may be in communication with a flow of ambient air 20 via a tempering air fan 150 or other type of air movement device. The tempering air fan 150 may have any suitable size, shape, or configuration. The combined ammonia-tempering air injection grid 140 may include a number of air injection lances 160 positioned about the inlet 110. The air injection lances 160 may have any suitable size, shape, or configuration. Any number of the air injection lances 160 may be used. The air injection lances 160 may be in communication with the ambient air 20 or other type of air source from the tempering air fan 150 via one or more tempering air conduits 170. The tempering air conduits 170 may have any suitable size, shape, or configuration. Other components and other configurations may be used herein.

The combined ammonia-tempering air injection grid 140 also may be in communication with a flow of ammonia 180 or other type of reductant from an ammonia source 190. The combined ammonia-tempering air injection grid 140 may include a number of ammonia injection lances 160 positioned about the inlet 110. The ammonia injection lances 200 may have any suitable size, shape, or configuration. Any number of the ammonia injection lances 200 may be used. The ammonia injection lances 200 may be in communication with the flow of ammonia 180 via one or more ammonia conduits 210. The ammonia conduits 210 may have any suitable size, shape, or configuration. One or more pumps (not shown) or other type of fluid moving device also may be used herein.

The injection air lances 160 and the ammonia injection lances 200 may be separate structures with dedicated spray nozzles and/or dual fluid spray nozzles also may be used. By combining the flows of air and ammonia, the ambient air flow 20 may cool the ammonia injection lances 200 so as to thermally protect the ammonia injection lances 200 from the hot combustion gas stream 35. Specifically, the ambient air flow 20 serves to cool the ammonia injection lances 200 such that the combined ammonia-tempering air injection grid 140 may be positioned about the inlet 110 instead of downstream of an air injection grid for thermal protection. Moreover, by positioning the combined ammonia-tempering air injection grid 140 at the inlet 110, the hot combustion gases 35 may evaporate the flow of ammonia 180 in the flow of the ambient air 20 to ammonia vapor upstream of the catalyst for good overall distribution. Other components and other configurations may be used herein.

A gas mixer 220 may be positioned downstream of the combined ammonia-tempering air injection grid 140. The gas mixer 220 may include a series of baffles and the like. The gas mixer 220 may have any suitable size, shape, or configuration. The gas mixer 220 may mix and blend the flow of ambient air 20 and the flow of ammonia 180 in the combustion gas stream 35. The gas mixer 220 provides the combustion gas stream 35 with an adequate temperature distribution as well as an adequate ammonia distribution. Other components and other configurations may be used herein.

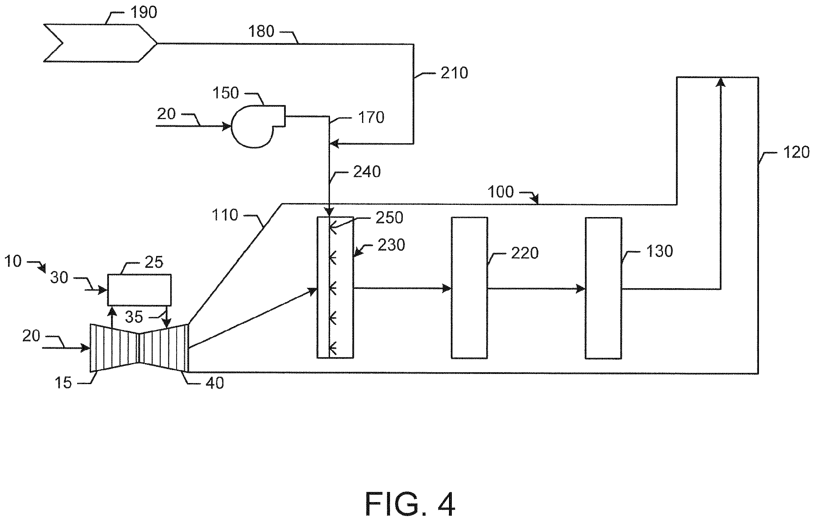

Fig. 2 shows the gas turbine engine 10 with an alternative selective catalyst reduction system 95. In this example, Fig. 4 shows the gas turbine engine 10 with an alternative selective catalyst reduction system 100 and an alternative example of a combined ammonia-tempering air injection grid 230 which as such do not form part of the invention as claimed. In this example, the ammonia conduits 200 may merge with the tempering air conduits 170 into one or more merged flow conduits 240 for use with one or more merged flow lances 250. As a further alternative, the respective conduits and lances may be co-axial and lead to the dual fluid spray nozzles. As above, the ambient air flow 20 serves to cool the ammonia components such that the combined ammonia-tempering air injection grid 140 may be positioned about the inlet 110 of the selective catalyst reduction system 100 instead of downstream of an air injection grid. Other components and other configurations may be used herein.

In use, the hot combustion gas stream 35 from the turbine 40 enters the inlet section 110 of the selective catalyst reduction system 100. The combustion gas stream 35 flows past the combined ammonia-tempering air injection grid 140 as the injection lances 160, 200 inject the flows of ambient air 20 and ammonia 180. The flows of ambient air 20 protect the ammonia injection lances 200 while cooling the combustion gas stream 35. Once injected, the flow of ammonia 180 may evaporate in the combustion gas stream 35 into ammonia vapor upstream of the catalyst 130. The gas mixer 220 promotes good mixing of the streams with a substantially uniform temperature and ammonia distribution about the catalyst 130.

The combined ammonia-tempering air injection grid 140 further avoids the need for separate air injection grids and ammonia injection grids and the associated piping. Moreover, specific spray nozzles designed to accommodate the flow patterns of the combustion gas stream 35 may be avoided. The combined ammonia-tempering air injection grid 140 thus cools the combustion gas stream 35 from the turbine 40 to within an appropriate temperature range for efficient use with the catalyst 130 in a simplified, less expensive design.

## Claims

1. A selective catalyst reduction system (100) for use with a combustion gas stream (35) of a gas turbine (10), comprising:
an inlet (110) configured to be positioned about the gas turbine (10);
a combined ammonia-tempering air injection grid (140) positioned about the inlet (110) and comprising a plurality of air injection lances (160) for providing a flow of tempering air and a plurality of ammonia injection lances (200) for providing a flow of ammonia, the plurality of air injection lances (160) being in communication with a source of tempering air (20) via one or more tempering air conduits (170) and the plurality of ammonia injection lances (200) being in communication with an ammonia source (190) via one or more ammonia conduits (210) different from the one or more tempering air conduits (170), the air injection lances (160) and the ammonia injection lances (200) being separate structures with dedicated spray nozzles and/or using dual fluid nozzles, wherein the plurality of air injection lances (160) and the plurality of ammonia injection lances (200) are positioned at the same location in the direction of flow of the combustion gas stream (35); and
a catalyst (130) positioned downstream of the combined ammonia-tempering air injection grid (140);
wherein the combined ammonia-tempering air injection grid (140) is configured to inject tempering air (20) through the plurality of air injection lances (160) and ammonia (180) through the plurality of ammonia injection lances (200) into the combustion gas stream (35) upstream of the catalyst (130).

2. The selective catalyst reduction system (100) of claim 1, wherein the combined ammonia-tempering air injection grid (140) comprises an air source (20) in communication with the plurality of air injection lances (140).

3. The selective catalyst reduction system (100) of claim 1, wherein the combined ammonia-tempering air injection grid (140) comprises one or more air conduits (170) in communication with the plurality of air injection lances (160).

4. The selective catalyst reduction system (100) of claim 1, wherein the combined ammonia-tempering air injection grid (140) comprises one or more fans (150) in communication with the plurality of air injection lances (160).

5. The selective catalyst reduction system (100) of claim 1, wherein the plurality of plurality of ammonia injection lances (200) is positioned about the plurality of air injection lances (160).

6. The selective catalyst reduction system (100) of claim 1, wherein the flow of air (20) from the plurality of air injection lances (160) cools the plurality of ammonia injection lances (200).

7. The selective catalyst reduction system (100) of claim 1, wherein the combined ammonia-tempering air injection grid (140) comprises an ammonia source (190) in communication with the plurality of ammonia injection lances (200).

8. The selective catalyst reduction system (100) of claim 1, wherein the combined ammonia-tempering air injection grid (140) comprises one or more ammonia conduits (210) in communication with the plurality of ammonia injection lances (200).

9. The selective catalyst reduction system (100) of claim 1, further comprising a gas mixer (220) positioned downstream of the combined ammonia-tempering air injection grid (140).

10. The selective catalyst reduction system (100) of claim 1, wherein the combined ammonia-tempering air injection grid (140) comprises an air conduit (170) and an ammonia conduit (210).

11. A method of operating a selective catalyst reduction system (100) with a combustion gas stream (35) of a gas turbine engine (10), comprising:
flowing the combustion gas stream (35) into the selective catalyst reduction system (100);
injecting a cooling air stream (20) into the combustion gas stream (35) about an inlet (110) of the selective catalyst reduction system (100);
injecting an ammonia stream (180) into the combustion gas stream (35) about the inlet (110) of the selective catalyst reduction system (100);
wherein the cooling air stream (20) and the ammonia stream (180) is injected into the combustion gas stream (35) through a combined ammonia-tempering air injection grid (140) positioned about the inlet (110) and comprising a plurality of air injection lances (160) for providing a flow of cooling air and a plurality of ammonia injection lances (200) for providing a flow of ammonia, wherein the plurality of air injection lances (160) is in communication with a source of tempering air (20) via one or more tempering air conduits (170) and the plurality of ammonia injection lances (200) is in communication with an ammonia source (190) via one or more ammonia conduits (210) different from the one or more tempering air conduits (170), wherein the air injection lances (160) and the ammonia injection lances (200) are separate structures with dedicated spray nozzles and/or using dual fluid nozzles, wherein the plurality of air injection lances (160) and the plurality of ammonia injection lances (200) are positioned at the same location in the direction of flow of the combustion gas stream (35), and wherein the tempering air (20) is injected through the plurality of air injection lances (160) and the ammonia (180) is injected through the ammonia injection lances (200) into the combustion gas stream (35) upstream of a catalyst (130) of the selective catalyst reduction system (100);
mixing the combustion gas stream (35), the cooling air stream (20), and the ammonia stream (180); and
reacting the mixed stream with the catalyst (130).

## Patentansprüche

1. System (100) für die selektive katalytische Reduktion zur Verwendung mit einem Verbrennungsgasstrom (35) einer Gasturbine (10), umfassend:
einen Einlass (110), der ausgestaltet ist, um die Gasturbine (10) herum positioniert zu sein;
ein kombiniertes Ammoniak-Temperierungsluft-Eindüsegitter (140), das um den Einlass (110) herum positioniert ist und eine Vielzahl von Lufteindüselanzen (160) zum Bereitstellen eines Temperierungsluftstroms und eine Vielzahl von Ammoniakeindüselanzen (200) zum Bereitstellen eines Ammoniakstroms umfasst, wobei sich die Vielzahl von Lufteindüselanzen (160) über eine oder mehrere Temperierungsluftleitungen (170) mit einer Quelle von Temperierungsluft (20) in Kommunikation befindet und sich die Vielzahl von Ammoniakeindüselanzen (200) über eine oder mehrere Ammoniakleitungen (210), die sich von der einen oder den mehreren Temperierungsluftleitungen (170) unterscheiden, mit einer Ammoniakquelle (190) in Kommunikation befindet, wobei die Lufteindüselanzen (160) und die Ammoniakeindüselanzen (200) separate Strukturen mit dedizierten Sprühdüsen sind und/oder Zweifluiddüsen verwenden, wobei die Vielzahl von Lufteindüselanzen (160) und die Vielzahl von Ammoniakeindüselanzen (200) an derselben Stelle in der Strömungsrichtung des Verbrennungsgasstroms (35) positioniert sind; und
einen Katalysator (130), der stromabwärts des kombinierten Ammoniak-Temperierungsluft-Eindüsegitters (140) positioniert ist;
wobei das kombinierte Ammoniak-Temperierungsluft-Eindüsegitter (140) ausgestaltet ist, Temperierungsluft (20) durch die Vielzahl von Lufteindüselanzen (160) und Ammoniak (180) durch die Vielzahl von Ammoniakeindüselanzen (200) stromaufwärts des Katalysators (130) in den Verbrennungsgasstrom (35) einzudüsen.

2. System (100) für die selektive katalytische Reduktion nach Anspruch 1, wobei das kombinierte Ammoniak-Temperierungsluft-Eindüsegitter (140) eine Luftquelle (20) in Kommunikation mit der Vielzahl von Lufteindüselanzen (140) umfasst.

3. System (100) für die selektive katalytische Reduktion nach Anspruch 1, wobei das kombinierte Ammoniak-Temperierungsluft-Eindüsegitter (140) eine oder mehrere Luftleitungen (170) in Kommunikation mit der Vielzahl von Lufteindüselanzen (160) umfasst.

4. System (100) für die selektive katalytische Reduktion nach Anspruch 1, wobei das kombinierte Ammoniak-Temperierungsluft-Eindüsegitter (140) ein oder mehrere Gebläse (150) in Kommunikation mit der Vielzahl von Lufteindüselanzen (160) umfasst.

5. System (100) für die selektive katalytische Reduktion nach Anspruch 1, wobei die Vielzahl von Ammoniakeindüselanzen (200) um die Vielzahl von Lufteindüselanzen (160) herum positioniert ist.

6. System (100) für die selektive katalytische Reduktion nach Anspruch 1, wobei der Luftstrom (20) von der Vielzahl von Lufteindüselanzen (160) die Vielzahl von Ammoniakeindüselanzen (200) kühlt.

7. System (100) für die selektive katalytische Reduktion nach Anspruch 1, wobei das kombinierte Ammoniak-Temperierungsluft-Eindüsegitter (140) eine Ammoniakquelle (190) in Kommunikation mit der Vielzahl von Ammoniakeindüselanzen (200) umfasst.

8. System (100) für die selektive katalytische Reduktion nach Anspruch 1, wobei das kombinierte Ammoniak-Temperierungsluft-Eindüsegitter (140) eine oder mehrere Ammoniakleitungen (210) in Kommunikation mit der Vielzahl von Ammoniakeindüselanzen (200) umfasst.

9. System (100) für die selektive katalytische Reduktion nach Anspruch 1, ferner umfassend einen Gasmischer (220), der stromabwärts des kombinierten Ammoniak-Temperierungsluft-Eindüsegitters (140) positioniert ist.

10. System (100) für die selektive katalytische Reduktion nach Anspruch 1, wobei das kombinierte Ammoniak-Temperierungsluft-Eindüsegitter (140) eine Luftleitung (170) und eine Ammoniakleitung (210) umfasst.

11. Verfahren zum Betreiben eines Systems (100) für die selektive katalytische Reduktion mit einem Verbrennungsgasstrom (35) eines Gasturbinentriebwerks (10), umfassend:
Strömen des Verbrennungsgasstroms (35) in das System (100) für die selektive katalytische Reduktion;
Eindüsen eines Kühlluftstroms (20) in den Verbrennungsgasstrom (35) um einen Einlass (110) des Systems (100) für die selektive katalytische Reduktion herum;
Eindüsen eines Ammoniakstroms (180) in den Verbrennungsgasstrom (35) um den Einlass (110) des Systems (100) für die selektive katalytische Reduktion herum;
wobei der Kühlluftstrom (20) und der Ammoniakstrom (180) in den Verbrennungsgasstrom (35) durch ein kombiniertes Ammoniak-Temperierungsluft-Eindüsegitter (140) eingedüst werden, das um den Einlass (110) herum positioniert ist und eine Vielzahl von Lufteindüselanzen (160) zum Bereitstellen eines Kühlluftstroms und eine Vielzahl von Ammoniakeindüselanzen (200) zum Bereitstellen eines Ammoniakstroms umfasst, wobei sich die Vielzahl von Lufteindüselanzen (160) über eine oder mehrere Temperierungsluftleitungen (170) mit einer Quelle für Temperierungsluft (20) in Kommunikation befindet und sich die Vielzahl von Ammoniakeindüselanzen (200) über eine oder mehrere Ammoniakleitungen (210), die sich von der einen oder den mehreren Temperierungsluftleitungen (170) unterscheiden, mit einer Ammoniakquelle (190) in Kommunikation befindet, wobei die Lufteindüselanzen (160) und die Ammoniakeindüselanzen (200) separate Strukturen mit dedizierten Sprühdüsen sind und/oder Zweifluiddüsen verwenden, wobei die Vielzahl von Lufteindüselanzen (160) und die Vielzahl von Ammoniakeindüselanzen (200) an derselben Stelle in Strömungsrichtung des Verbrennungsgasstroms (35) positioniert sind, und wobei die Temperierungsluft (20) durch die Vielzahl von Lufteindüselanzen (160) und das Ammoniak (180) durch die Ammoniakeindüselanzen (200) stromaufwärts eines Katalysators (130) des Systems (100) für die selektive katalytische Reduktion in den Verbrennungsgasstrom (35) eingedüst wird;
Mischen des Verbrennungsgasstroms (35), des Kühlluftstroms (20) und des Ammoniakstroms (180); und
Reagieren des gemischten Stroms mit dem Katalysator (130).

## Revendications

1. Système de réduction catalytique sélective (100) destiné à être utilisé avec un courant gazeux de combustion (35) d'une turbine à gaz (10), comprenant :
une entrée (110) configurée pour être positionnée autour de la turbine à gaz (10) ;
une grille combinée d'injection d'air de trempe-d'ammoniac (140) positionnée autour de l'entrée (110) et comprenant une pluralité de lances d'injection d'air (160) pour fournir un flux d'air de trempe et une pluralité de lances d'injection d'ammoniac (200) pour fournir un flux d'ammoniac, la pluralité de lances d'injection d'air (160) étant en communication avec une source d'air de trempe (20) via un ou plusieurs conduits d'air de trempe (170) et la pluralité de lances d'injection d'ammoniac (200) étant en communication avec une source d'ammoniac (190) via un ou plusieurs conduits d'ammoniac (210) différents du ou des conduits d'air de trempe (170), les lances d'injection d'air (160) et les lances d'injection d'ammoniac (200) étant des structures séparées avec des buses de pulvérisation dédiées et/ou utilisant des doubles buses de fluide, dans lequel la pluralité de lances d'injection d'air (160) et la pluralité de lances d'injection d'ammoniac (200) sont positionnées au même endroit dans la direction d'écoulement du courant de gaz de combustion (35) ; et
un catalyseur (130) positionné en aval de la grille combinée d'injection d'air de trempe-d'ammoniac (140) ;
dans lequel la grille combinée d'injection d'air de trempe-d'ammoniac (140) est configurée pour injecter de l'air de trempe (20) à travers la pluralité de lances d'injection d'air (160) et de l'ammoniac (180) à travers la pluralité de lances d'injection d'ammoniac (200) dans le courant de gaz de combustion (35) en amont du catalyseur (130).

2. Système de réduction catalytique sélective (100) selon la revendication 1, dans lequel la grille combinée d'injection d'air de trempe-d'ammoniac (140) comprend une source d'air (20) en communication avec la pluralité de lances d'injection d'air (140).

3. Système de réduction catalytique sélective (100) selon la revendication 1, dans lequel la grille combinée d'injection d'air de trempe-d'ammoniac (140) comprend un ou plusieurs conduits d'air (170) en communication avec la pluralité de lances d'injection d'air (160).

4. Système de réduction catalytique sélective (100) selon la revendication 1, dans lequel la grille combinée d'injection d'air de trempe-d'ammoniac (140) comprend un ou plusieurs ventilateurs (150) en communication avec la pluralité de lances d'injection d'air (160).

5. Système de réduction catalytique sélective (100) selon la revendication 1, dans lequel la pluralité de pluralité de lances d'injection d'ammoniac (200) est positionnée autour de la pluralité de lances d'injection d'air (160).

6. Système de réduction catalytique sélective (100) selon la revendication 1, dans lequel le flux d'air (20) provenant de la pluralité de lances d'injection d'air (160) refroidit la pluralité de lances d'injection d'ammoniac (200).

7. Système de réduction catalytique sélective (100) selon la revendication 1, dans lequel la grille combinée d'injection d'air de trempe-d'ammoniac (140) comprend une source d'ammoniac (190) en communication avec la pluralité de lances d'injection d'ammoniac (200).

8. Système de réduction catalytique sélective (100) selon la revendication 1, dans lequel la grille combinée d'injection d'air de trempe-d'ammoniac (140) comprend un ou plusieurs conduits d'ammoniac (210) en communication avec la pluralité de lances d'injection d'ammoniac (200).

9. Système de réduction catalytique sélective (100) selon la revendication 1, comprenant en outre un mélangeur de gaz (220) positionné en aval de la grille combinée d'injection d'air de trempe-d'ammoniac (140).

10. Système de réduction catalytique sélective (100) selon la revendication 1, dans lequel la grille combinée d'injection d'air de trempe-d'ammoniac (140) comprend un conduit d'air (170) et un conduit d'ammoniac (210).

11. Procédé d'exploitation d'un système de réduction catalytique sélective (100) doté d'un courant de gaz de combustion (35) d'un moteur de turbine à gaz (10), comprenant :
l'écoulement du courant de gaz de combustion (35) dans le système de réduction catalytique sélective (100) ;
l'injection d'un courant d'air de refroidissement (20) dans le courant de gaz de combustion (35) autour d'une entrée (110) du système de réduction catalytique sélective (100) ;
l'injection d'un courant d'ammoniac (180) dans le courant de gaz de combustion (35) autour de l'entrée (110) du système de réduction catalytique sélective (100) ;
dans lequel le courant d'air de refroidissement (20) et le courant d'ammoniac (180) sont injectés dans le courant de gaz de combustion (35) à travers une grille combinée d'injection d'air de trempe-d'ammoniac (140) positionnée autour de l'entrée (110) et comprenant une pluralité de lances d'injection d'air (160) pour fournir un flux d'air de refroidissement et une pluralité de lances d'injection d'ammoniac (200) pour fournir un flux d'ammoniac, dans lequel la pluralité de lances d'injection d'air (160) est en communication avec une source d'air de trempe (20) par l'intermédiaire d'un ou plusieurs conduits d'air de trempe (170) et la pluralité de lances d'injection d'ammoniac (200) est en communication avec une source d'ammoniac (190) par l'intermédiaire d'une ou plusieurs conduites d'ammoniac (210) différentes des un ou plusieurs conduits d'air de trempe (170), dans lequel les lances d'injection d'air (160) et les lances d'injection d'ammoniac (200) sont des structures séparées avec des buses de pulvérisation dédiées et/ou utilisant des doubles buses de fluide, dans lequel la pluralité de lances d'injection d'air (160) et la pluralité de lances d'injection d'ammoniac (200) sont positionnées au même endroit dans la direction du flux du courant de gaz de combustion (35), et dans lequel l'air de trempe (20) est injecté à travers la pluralité de lances d'injection d'air (160) et l'ammoniac (180) est injecté à travers les lances d'injection d'ammoniac (200) dans le courant de gaz de combustion (35) en amont d'un catalyseur (130) du système de réduction catalytique sélective (100) ;
le mélange du courant de gaz de combustion (35), du courant d'air de refroidissement (20), et du courant d'ammoniac (180) ; et
la mise en réaction du courant mélangé avec le catalyseur (130).
